(19) Europäisches Patentamt
European Patent Office
Office européen des brevets

(11) EP 2 365 381 A1

(12) **EUROPÄISCHE PATENTANMELDUNG**

(43) Veröffentlichungstag:
14.09.2011 Patentblatt 2011/37

(51) Int Cl.:
*G02C 13/00* (2006.01)    *G02C 1/02* (2006.01)

(21) Anmeldenummer: 10154069.8

(22) Anmeldetag: 19.02.2010

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA RS

(71) Anmelder: Anger, Wilhelm
5020 Salzburg (AT)

(72) Erfinder: Baumgartner, Robert Anton
4050, Traun (AT)

(74) Vertreter: TBK
Bavariaring 4-6
80336 München (DE)

(54) **Klebevorrichtung**

(57) Die Erfindung bezieht sich auf eine Klebevorrichtung, nämlich eine Vorrichtung zum Verkleben eines Brillenglases (2) einer randlosen Brille mit Verbindungselementen (8, 12) einer Brücke (6) und einer Backe (10) der randlosen Brille. Die Vorrichtung weist einen zylindrischen Haltezapfen (32) auf, der um seine Achse (34) drehbar und axial verschiebbar in einer Bohrung (30) eines Rahmens (24) der Vorrichtung angeordnet ist. Der Haltezapfen (32) ist dazu bestimmt, das Brillenglas (2) mittig derart zu halten, dass dessen leicht konvex gekrümmte Vorderseite (3) sich im Wesentlichen senkrecht zu der Zapfenachse (34) erstreckt. In einer zu der Zapfenachse (34) senkrechten Ebene verlaufen zwei gerade Stützleisten (44) parallel zueinander und beiderseits der Zapfenachse (34), von der die Stützleisten (44) gleiche Abstände haben. Die Stützleisten (44) sind derart am Rahmen (24) angeordnet, dass die Vorderseite (3) des vom Haltezapfen (32) gehaltenen Brillenglases (2) den Stützleisten (44) zugewandt ist. Der Haltezapfen (32) hält das Brillenglas (2) so, dass das Brillenglas (2) mit seiner Vorderseite (3) in Richtung zu den Stützleisten (44) gedrückt werden kann, so dass zwischen der Vorderseite (3) und jeder der Stützleisten (44) eines der Verbindungselemente (8, 12) einklemmbar ist. Die Vorrichtung dient dazu, die auf der Vorderseite (3) des Brillenglases (2) eingeklemmten Verbindungselemente (8, 12) während des Einbringens von Klebstoff zwischen Fügeflächen am Brillenglas (2) und am jeweiligen Verbindungselement (8, 12) und für eine gewisse Zeit danach zuverlässig in selbsttätig ausgerichteter, korrekter Position zu fixieren.

Fig. 5

**Beschreibung**

Die Erfindung bezieht sich auf eine Vorrichtung zum Verkleben eines Brillenglases einer randlosen Brille mit Verbindungselementen einer Brücke und einer Backe der randlosen Brille.

Durch das Dokument EP 2 019 331 A1 ist ein Verfahren zur Herstellung einer randlosen Brille bekannt, bei der Verbindungselemente der Backen und der Brücke der Brille mit den Vorderseiten der Brillengläser verklebt sind. Bei diesem bekannten Verfahren werden zunächst zwei Brillen-Rohgläser aus einem Kunststoff gefertigt, auf deren Vorder- und Rückseite eine Beschichtung aufgebracht wird. Die zwei beschichteten Brillen-Rohgläser werden in der Weise geschliffen, dass zwei Brillengläser mit einer gewünschten Scheibenform erhalten werden. An vorbestimmten Anbringungsorten für die Verbindungselemente der Backen und der Brücke auf der Vorderseite der Brillengläser wird die Beschichtung zur Bildung von Fügeflächen abgetragen, die in Gestalt und Abmessungen im Wesentlichen an den Verbindungselementen ausgebildeten Fügeflächen entsprechen. Die Verbindungselemente werden dann mit der Vorderseite der Brillengläser an den Anbringungsorten verklebt. Da im Bereich der Fügeflächen an den Brillengläsern deren Grundmaterial freiliegt, kann eine dauerhaft feste Klebeverbindung zwischen den Verbindungselementen und den Brillengläsern hergestellt werden.

Durch das Dokument EP 2 019 331 A1 ist ferner eine bei dem vorstehend erläuterten Verfahren einsetzbare Vorrichtung zum Verkleben der Brillengläser mit den Verbindungselementen der Brücke und der Backen bekannt, die die im Oberbegriff von Patentanspruch 1 aufgeführten Merkmale aufweist. Die bekannte Vorrichtung umfasst einen als Montageplatte ausgebildeten Rahmen sowie Haltevorrichtungen, mit deren Hilfe die beiden Brillengläser der herzustellenden Brille an der Montageplatte fixiert werden. Dabei ist die Vorderseite des jeweiligen Brillenglases von der Montageplatte abgewandt, so dass die auf den Vorderseiten der Brillengläser ausgebildeten Fügeflächen freiliegen. Dabei ist vorgesehen, dass zunächst das jeweilige Verbindungselement am zugeordneten Anbringungsort angeordnet und angedrückt wird, bevor Klebstoff zwischen die Fügefläche am Brillenglas und die Fügefläche am Verbindungselement eingebracht wird. Bis zum Erreichen der Anfangshaftung werden das Verbindungselement und das Brillenglas aneinander angedrückt. Wenn dabei das Verbindungselement von Hand oder mittels eines handgehaltenen Werkzeugs angedrückt wird, hängt die Qualität der Klebeverbindung erheblich vom Geschick der die Verklebung durchführenden Person ab.

Der Erfindung liegt die Aufgabe zugrunde, eine Vorrichtung zum Verkleben eines Brillenglases einer randlosen Brille mit Verbindungselementen einer Brücke und einer Backe der randlosen Brille zu schaffen, die einfach ausgebildet ist, eine einfache Handhabung ermöglicht und es ferner ermöglicht, dauerhaft feste Klebeverbindungen zuverlässig herzustellen.

Diese Aufgabe wird erfindungsgemäß gelöst durch die Vorrichtung gemäß Patentanspruch 1. Die erfindungsgemäße Vorrichtung weist die zwei geraden, zueinander parallelen Stützleisten auf, die beiderseits des Haltezapfens angeordnet sind. Der Haltezapfen ist dazu bestimmt, das Brillenglas mittig derart zu halten, dass sich dessen Vorderseite im Wesentlichen senkrecht zu der Zapfenachse erstreckt und den Stützleisten zugewandt ist. Da der Haltezapfen in der ihn aufnehmenden Bohrung drehbar und axial verschiebbar angeordnet ist, kann das vom Haltezapfen gehaltene Brillenglas um die Zapfenachse gedreht werden und kann der Abstand zwischen der Vorderseite des Brillenglases und den Stützleisten variiert werden. Dies ermöglicht es, das Brillenglas in eine solche Drehstellung zu drehen, dass die auf der Vorderseite des Brillenglases ausgebildeten Fügeflächen zur Deckung mit den Stützleisten kommen und dass bei dieser Drehstellung das jeweilige Verbindungselement zwischen die zugeordnete Fügefläche am Brillenglas und die Stützleiste eingesetzt wird und zwischen der Vorderseite des Brillenglases und der Stützleiste eingeklemmt wird. Während das Verbindungselement auf diese Weise eingeklemmt ist, kann der Klebstoff zwischen die Fügeflächen am Brillenglas und am Verbindungselement eingebracht werden, wonach das Verbindungselement weiterhin eingeklemmt gehalten wird, bis die Anfangshaftung erreicht ist. Dieser Klebevorgang erfordert nach dem Einklemmen des Verbindungselementes zwischen der Vorderseite des Brillenglases und der Stützleiste keine Manipulationen am Verbindungselement und ermöglicht die Herstellung qualitativ hochwertiger Klebeverbindungen mit hoher Zuverlässigkeit.

Vorteilhafte Ausgestaltungen der Erfindung sind in den abhängigen Ansprüchen definiert.

Die Erfindung wird im Folgenden anhand eines Ausführungsbeispiels unter Bezugnahme auf die Zeichnungen näher erläutert. Es zeigen:

Figur 1 eine Vorderansicht von zwei Brillengläsern sowie weiterer Elemente eines Ausführungsbeispiels einer randlosen Brille, bei deren Herstellung die erfindungsgemäße Vorrichtung zur Anwendung kommen kann;

Figur 2 eine perspektivische Ansicht einer linken Backe der Brille gemäß Figur 1;

Figur 3 eine perspektivische Ansicht einer Brücke der Brille gemäß Figur 1;

Figur 4 schematisch eine perspektivische Ansicht eines Ausführungsbeispiels der erfindungsgemäßen Vorrichtung;

Figur 5 eine ausschnittsweise Darstellung der Vorrichtung gemäß Figur 4 im Schnitt gemäß A-B in Figur 4;

Figur 6 eine ausschnittweise Draufsicht auf die Vorrichtung gemäß Figur 4 bei Betrachtung in Richtung C in Figur 5;

Figur 7 eine Draufsicht auf mehrere Paare von mit Stützleisten versehenen Trägern; und

Figur 8 eine abgewandelte Ausführungsform eines Haltezapfens der Vorrichtung gemäß Figur 4.

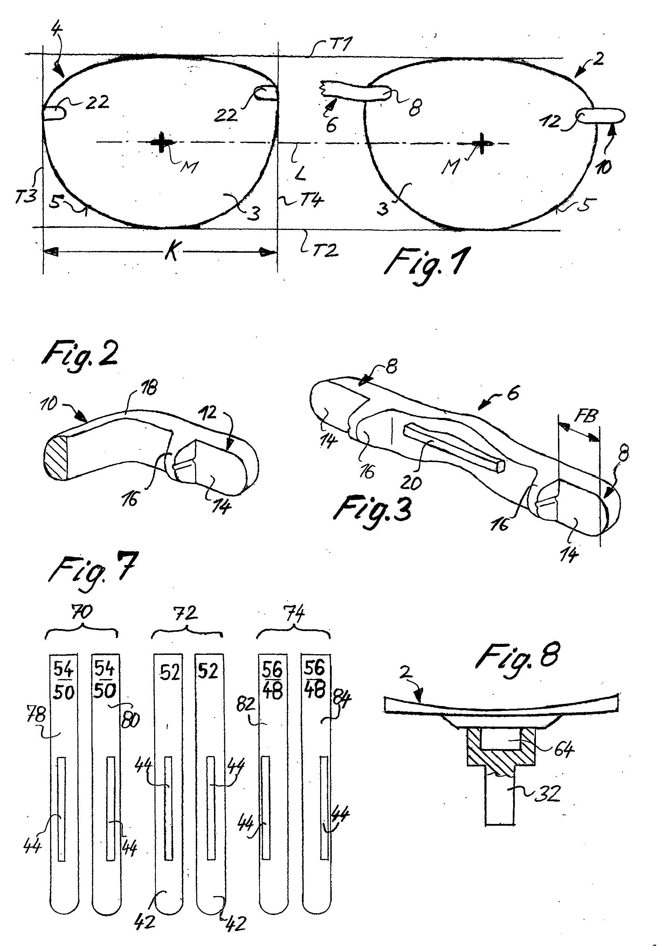

Im Folgenden wird zunächst anhand der Figuren 1 bis 3 ein Ausführungsbeispiel einer randlosen Brille erläutert, bei deren Herstellung die erfindungsgemäße Vorrichtung zur Anwendung kommen kann. Figur 1 zeigt zwei Brillengläser sowie weitere Elemente einer randlosen Brille bei Betrachtung von vorn. Die Brille umfasst ein linkes Brillenglas 2, ein rechtes Brillenglas 4 und eine zwischen den beiden Brillengläsern angeordnete Brücke 6, von der in Figur 1 lediglich die linke Hälfte dargestellt ist. In der vorliegenden Erläuterung der Brille beziehen sich die Begriffe "links" und "rechts" auf die entsprechenden Angaben zum menschlichen Kopf. Dementsprechend ist beispielsweise das linke Brillenglas 2 dem linken Auge zugeordnet und in Figur 1 rechts dargestellt. Jedes der beiden Brillengläser 2 und 4 hat eine in Figur 1 sichtbare Vorderseite 3, eine in Figur 1 nicht sichtbare Rückseite, die bei aufgesetzter Brille dem jeweiligen Auge des Brillenträgers zugewandt ist, und einen umlaufenden Rand 5, der das Brillenglas radial außen, bezogen auf seinen geometrischen Mittelpunkt M, begrenzt. Die Brücke 6 ist ein langgestrecktes Element, das zwischen den beiden Brillengläsern 2 und 4 angeordnet ist und diese miteinander verbindet, und weist an jedem ihrer beiden Enden ein Verbindungselement 8 auf, das mit der in Figur 1 sichtbaren Vorderseite 3 des Brillenglases 2 bzw. 4 verklebt ist. Die Brille weist ferner eine linke Backe 10 und eine in Figur 1 nicht dargestellte rechte Backe auf. Die Backen sind jeweils an einem von der Brücke 6 abgewandten Randbereich des Brillenglases 2 bzw. 4 befestigt. Zu diesem Zweck weist jede der beiden Backen an ihrem vorderen Ende ein Verbindungselement 12 auf, das mit der Vorderseite 3 des Brillenglases 3 bzw. 4 verklebt ist. Die Backen sind jeweils mit einem in Figur 1 nicht dargestellten Bügel der Brille gelenkig verbunden.

Figur 2 zeigt in perspektivischer Darstellung bei Betrachtung von schräg oben und hinten vergrößert und ausschnittsweise die linke Backe 10 mit ihrem Verbindungselement 12. Bei dem dargestellten Ausführungsbeispiel sind die Backen und die Brücke 6 einschließlich ihrer jeweiligen Verbindungselemente 8 bzw. 12 aus einem spritzgießfähigen Kunststoff gefertigt. Das Verbindungselement 12 der linken Backe 10 hat im Wesentlichen die Gestalt eines Quaders und weist auf seiner Rückseite die in Figur 2 sichtbare Fügefläche 14 auf, die im Wesentlichen eben ist und die Gestalt eines Rechtecks hat, dessen eine Seite abgerundet ist, wie dies in Figur 2 gezeigt ist. Die Fügefläche ist dazu bestimmt, mit einer komplementären Fügefläche auf der Vorderseite 3 des linken Brillenglases 2 verklebt zu werden. Das Verbindungselement 12 umfasst ferner einen angrenzend an die Fügefläche 14 angeordneten, sich nach hinten erstreckenden Vorsprung 16, der dazu bestimmt ist, am Rand 5 des Brillenglases 2 anzuliegen. Das Verbindungselement 12 der Backe 10 geht über bzw. ist verbunden mit einem gekrümmten Abschnitt 18 der Backe 10, der das Verbindungselement 12 mit dem nicht dargestellten Gelenk verbindet, an dem die Backe 10 mit dem nicht dargestellten linken Bügel der Brille verbunden ist.

Die vorstehende Erläuterung der linken Backe 10 gilt sinngemäß auch für die nicht dargestellte rechte Backe der Brille.

Figur 3 zeigt die Brücke 6 vergrößert in perspektivischer Darstellung bei Betrachtung von schräg oben und hinten. Hinsichtlich der Ausbildung der Verbindungselemente 8 der Brücke 6 gilt die vorstehende Erläuterung des Verbindungselementes 12 der Backe 10. Dementsprechend weist jedes der beiden Verbindungselemente 8 der Brücke 6 die Fügefläche 14 und den angrenzend an diese angeordneten Vorsprung 16 auf. Im mittleren Abschnitt der Brücke 6 ist an dieser eine Leiste 20 angeformt, mit deren Hilfe an der Brücke 6 ein nicht dargestelltes Stegbauteil befestigt werden kann, das zur Abstützung der Brille an der Nase des Brillenträgers dient.

Bei dem vorstehend beschriebenen Ausführungsbeispiel einer randlosen Brille sind die Brücke einschließlich ihrer beiden Verbindungselemente und die Backen einschließlich ihres Verbindungselementes einstückig aus einem Kunststoff spritzgegossene Bauteile. Abweichend hiervon können die jeweiligen Verbindungselemente 8 bzw. 12 einerseits und die übrigen Abschnitte der Brücke 6 und der beiden Backen andererseits aus voneinander verschiedenen Werstoffen bestehen und vor dem Verkleben der Verbindungselemente mit den Brillengläsern miteinander verbunden worden sein oder erst nach dem Verkleben der Verbindungselemente mit den Brillengläsern miteinander verbunden werden. Beispielsweise ist es möglich, das jeweilige Verbindungselement am übrigen Abschnitt der Brücke oder Backe in einem Spritzgießverfahren anzuspritzen und dabei den übrigen Abschnitt mit dem Werkstoff des Verbindungselementes teilweise oder vollständig zu ummanteln. Unabhängig von der übrigen Ausbildung und dem Herstellungsverfahren der Brücke und der Backen ist wesentlich, dass an dem jeweiligen Verbindungselement die im Wesentlichen ebene Fügefläche 14 ausgebildet ist, die dazu bestimmt ist, mit einer komplementären Fügefläche auf der Vorderseite eines der beiden Brillengläser fest verklebt zu werden.

Die beiden Brillengläser 2 und 4 sind üblicherweise jeweils aus einem beschichteten Brillen-Rohglas hergestellt worden, das einen kreisförmigen Rand aufweist. Das Brillen-Rohglas ist auf seiner Vorderseite und seiner Rückseite mit einer Beschichtung versehen, die üblicherweise aus mehreren Schichten besteht und für Kratzfestigkeit und/oder Beeinflussung der Reflexionseigenschaften und/oder schmutzabweisende Eigenschaften der Oberflächen des Brillenglases sorgen soll.

Die geometrische Gestalt des Randes 5 der beiden Brillengläser 2 und 4 bei Betrachtung von vorn (oder hinten) wird als Scheibenform bezeichnet. Es sind zahlreiche verschiedene Scheibenformen bekannt und bei randlosen Brillen möglich. Figur 1 zeigt die Brillengläser 2 und 4 mit lediglich einer der zahlreichen möglichen und bekannten Scheibenformen. Jedes Brillenglas hat einen geometrischen Mittelpunkt M, der - bei Betrachtung des Brillenglases von vorn oder hinten - zusammenfällt mit dem Mittelpunkt eines als Kasten bezeichneten Rechtecks. Dieser Kasten ist definiert durch eine obere Tangente T1 an die Ränder der beiden Brillengläser 2 und 4, eine untere Tangente T2 an die Ränder der beiden Brillengläser 2 und 4 sowie eine äußere Tangente T3 und eine innere Tangente T4 an den Rand des Brillenglases, wobei die Tangenten T3 und T4 senkrecht zu den Tangenten T1 und T2 verlaufen (siehe Figur 1). Die größte Breite eines Brillenglases, d.h. der Abstand zwischen den Tangenten T3 und T4, wird als das Kastenmaß K des Brillenglases bezeichnet. In Abhängigkeit vom Design der Brille und den Abmessungen des Kopfes des Brillenträgers kann die erforderliche und gewünschte maximale Breite eines Brillenglases von Brille zu Brille verschieden sein. Üblich sind maximale Breiten von 48 mm, 50 mm, 52 mm, 54 mm und 56 mm. Diesen entspricht ein Kastenmaß K von 48, 50, 52, 54 bzw. 56.

Um die Brillengläser 2 und 4 mit der gewünschten, beispielsweise der in Figur 1 gezeigten Scheibenform herzustellen, wird üblicherweise ein auch als Block oder Klebeblock bezeichneter Glashalter auf der Vorderseite des Brillen-Rohglases lösbar angeklebt, wobei eine Drehachse des Glashalters senkrecht durch die Vorderseite des Brillen-Rohglases und durch den geometrischen Mittelpunkt M der vorbestimmten Scheibenform des herzustellenden Brillenglases verläuft. Während das Brillen-Rohglas um die Drehachse des Glashalters gedreht wird, wird vom Rand des Brillen-Rohglases ausgehend von diesem durch Schleifen in Abhängigkeit von der Drehstellung des Brillen-Rohglases soviel Material entfernt, dass das Brillenglas mit der gewünschten Scheibenform erhalten wird.

Wie bereits vorstehend beschrieben ist, sind die Brücke und die Backen der Brille mit den Brillengläsern 2 und 4 verklebt. Zu diesem Zweck sind auf den Vorderseiten 3 der Brillengläser 2 und 4 Fügeflächen ausgebildet, wobei für jede der Fügeflächen 14 der Verbindungselemente 8 und 21 jeweils eine Fügefläche 22 vorgesehen ist. Von diesen Fügeflächen 22 sind in Figur 1 lediglich am rechten Brillenglas 4 die Fügefläche für das rechte Verbindungselement 8 der Brücke 6 sowie die Fügefläche für das Verbindungselement der rechten Backe gezeigt. Gleichartige Fügeflächen sind am linken Brillenglas 2 ausgebildet, wobei diese in Figur 1 durch die Brücke 6 bzw. die linke Backe 10 verdeckt sind. Die Fügeflächen 22 an den Brillengläsern 2 und 4 gleichen in Form und Abmessungen im Wesentlichen den Fügeflächen 14 an dem Verbindungselement 8 bzw. 12, das an der jeweiligen Fügefläche 22 angeklebt ist. Dies heißt mit anderen Worten, dass die Fügeflächen 14 einerseits und die Fügeflächen 22 andererseits zueinander komplementär gestaltet sind. Die Fügeflächen 22 sind an den Brillengläsern 2 und 4 dadurch ausgebildet worden, dass im Bereich der auszubildenden Fügeflächen die Beschichtung auf der Vorderseite des jeweiligen Brillenglases vollständig, d.h. zumindest bis zur ganzen Dicke der Beschichtung abgetragen worden ist. Der Zweck des Abtragens der Beschichtung besteht darin, das Grundmaterial der Brillengläser frei zu legen, damit die jeweilige Fügefläche 22 am Brillenglas die stoffliche Beschaffenheit des Grundmaterials des Brillenglases hat. Dies ist Voraussetzung für die Herstellung einer dauerhaft festen Klebeverbindung zwischen den Verbindungselementen und den Brillengläsern.

Die Fügeflächen 22 auf der Vorderseite der Brillengläser 2 und 4 gehen jeweils vom Rand 5 des Brillenglases aus bzw. erstrecken sich bis zu diesem Rand. Der Ort einer jeden Fügefläche 22 an den Brillengläsern 2 und 4 ist durch das Design der Brille und die Scheibenform der Brillengläser 2 und 4 vorgegeben. Der Abstand jeder Fügefläche 22 von einer die beiden geometrischen Mittelpunkte M verbindenden Mittellinie L ist im Wesentlichen gleich dem Abstand des Berührungspunktes der Tangente T3 bzw. T4 von dieser Mittellinie L. Dies heißt mit anderen Worten, dass der in Richtung der Mittellinie L gemessene horizontale Abstand zwischen den beiden Fügeflächen 22 jedes der beiden Brillengläser 2 und 4 bei gleichem Kastenmaß K unabhängig von der Scheibenform stets gleich ist, wobei der vertikale Abstand der Fügeflächen 22 eines Brillenglases von der Mittellinie L mit der Scheibenform variieren kann.

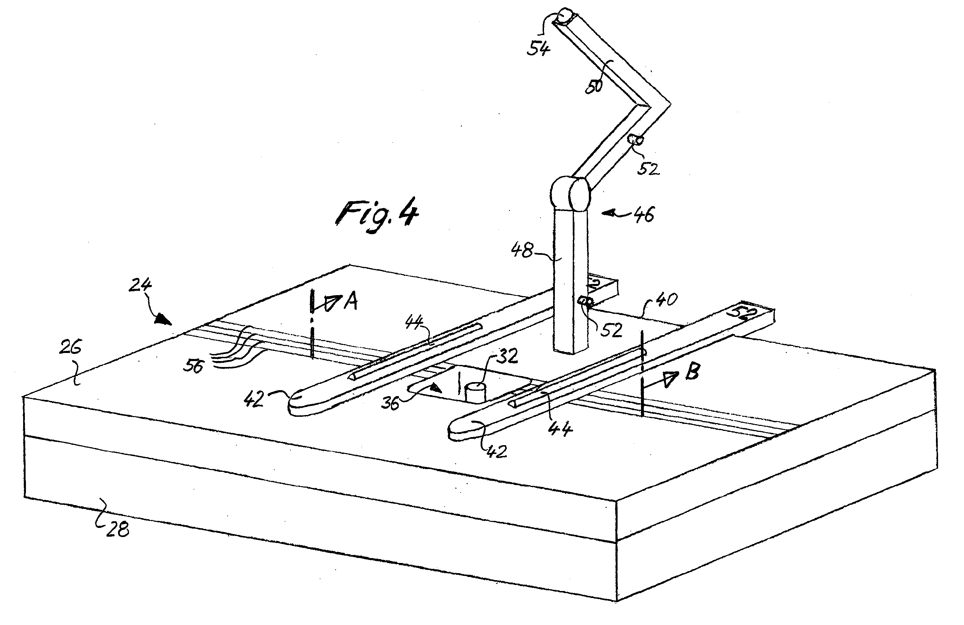

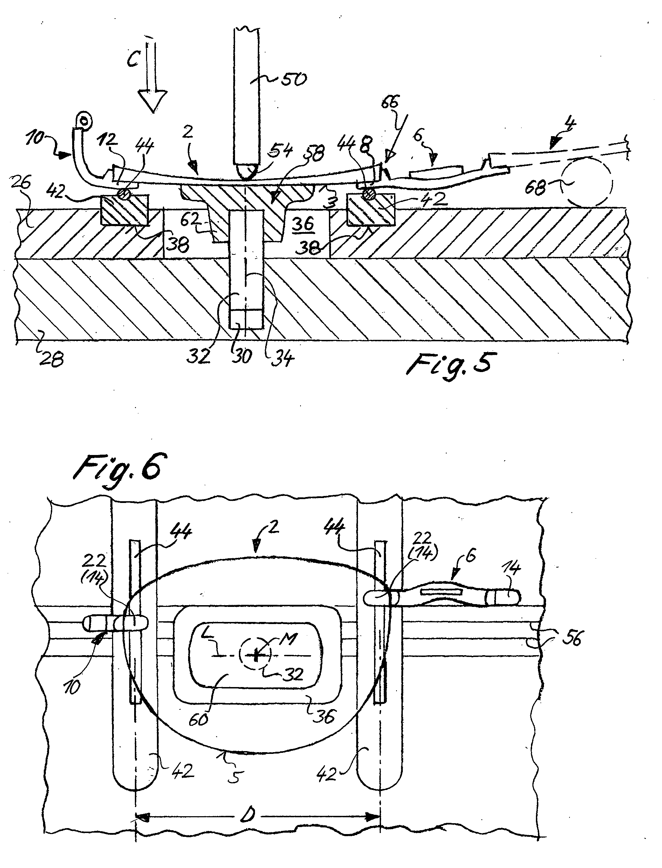

Im Folgenden wird insbesondere unter Bezugnahme auf die Figuren 4 bis 6 ein Ausführungsbeispiel der erfindungsgemäßen Vorrichtung erläutert. Diese Vorrichtung dient zum Verkleben der Brillengläser und der Verbindungselemente einer randlosen Brille von der Art, die vorstehend anhand des Ausführungsbeispiels gemäß den Figuren 1 bis 3 erläutert ist. Figur 4 zeigt das Ausführungsbeispiel schematisch in perspektivischer Darstellung bei Betrachtung von schräg oben. Figur 5 ist eine ausschnittsweise und vergrößerte Schnittdarstellung gemäß A-B in Figur 4, wobei Figur 5 die Vorrichtung in ihrer Gebrauchsstellung in Verbindung mit einem Brillenglas, einer Backe und der Brücke der herzustellenden Brille zeigt. Figur 6 ist eine Draufsicht zu Figur 5 bei Betrachtung in Richtung C, wobei in Figur 6 ein in Figur 5 in seiner Arbeitsstellung gezeigter Niederhalter weggelassen ist. Die in den Figuren 5 und 6 gezeigten Elemente der herzustellenden Brille sind Elemente des anhand der Figuren 1 bis 3 vorstehend erläuterten Ausführungsbeispiels einer randlosen Brille. Diese Elemente sind mit den gleichen Bezugzeichen wie in den Figuren 1 bis 3 versehen und werden im Folgenden nicht erneut erläutert, da für sie die vorstehenden Erläuterungen gelten. In Figur 6 sind innerhalb des Randes 5 des linken Brillenglases 2 Teile und Elemente dargestellt, die sich auf der Vorderseite des Brillenglases 2 befinden, d.h. bei Betrachtung in Richtung C in Figur 5 durch das Brillenglas 2 hindurch gesehen werden.

Die dargestellte Vorrichtung umfasst einen Rahmen 24, wobei hier mit "Rahmen" ein Grundkörper der Vorrichtung bezeichnet wird, der auch als Gestell oder Gehäuse bezeichnet werden kann. Beim dargestellten Ausführungsbeispiel hat der Rahmen 24 die Gestalt eines Quaders und ist der Rahmen 24 durch eine obere rechteckige Platte 26 und eine untere rechteckige Platte 28 gebildet, die aufeinander liegen und aneinander befestigt sind. Für die Zwecke der folgenden Beschreibung wird die in Figur 4 sichtbare Oberseite der oberen Platte 26 als horizontal ausgerichtete Arbeitsfläche angesehen und bezeichnet dementsprechend "vertikal" einen Verlauf senkrecht zu dieser horizontalen Arbeitsfläche. In der unteren Platte 28 und somit in dem Rahmen 24 ist eine vertikal ausgerichtete Bohrung 30 ausgebildet, in der ein zylindrischer Haltezapfen 32 derart sitzt, dass er um seine Zapfenachse 34 in der Bohrung 30 drehbar ist und in der Bohrung 30 axial verschiebbar ist. Der Haltezapfen 32 ist dazu bestimmt, ein Brillenglas in weiter unten beschriebener Weise zu halten.

Ferner ist in der oberen Platte 26 und somit im Rahmen 24 oberhalb der Bohrung 30 eine Ausnehmung 36 ausgebildet, die nach oben offen ist. Der in die Bohrung 30 eingesetzte Haltezapfen 32 ragt von unten etwa mittig in die Ausnehmung 36, die das obere, freie Ende des Haltezapfens 32 umgibt. In der oberen Platte 26 und somit im Rahmen 24 sind zwei gerade, oben offene Nuten mit Rechteckprofil ausgebildet, die jeweils eine Ausnehmung 38 bilden. Bei dem dargestellten Ausführungsbeispiel verlaufen die beiden Ausnehmungen 38 beiderseits der Zapfenachse 34 zum hinteren Rand 40 (siehe Figur 4) der oberen Platte 26. In jede der zwei Ausnehmungen 38 ist passend und lösbar ein Träger 42 eingesetzt, der die Gestalt eines langgestreckten Quaders hat und am hinteren Rand 40 der oberen Platte 26 über diese hinausragt, wie dies in Figur 4 gezeigt ist.

Jeder der beiden Träger 42 ist auf seiner Oberseite mit einer Stützleiste 44 versehen. Die zwei Stützleisten 44 dienen dazu, während des Verklebens eines Brillenglases mit den Verbindungselementen die Verbindungselemente abzustützen, und die Träger 42 dienen zum Tragen der Stützleisten 44. Die beiden Stützleisten 44 sind jeweils durch ein langgestrecktes, gerades Element gebildet und verlaufen parallel zueinander. Jede Stützleiste 44 ist entweder an ihrem Träger 42 angeformt oder an diesem befestigt. Bei dem dargestellten Ausführungsbeispiel ist jede Stützleiste 44 durch einen Stab aus Hartgummi gebildet. Vorzugsweise besteht jede Stützleiste 44 aus einem Werkstoff, der zu möglichst großer Haftreibung mit dem jeweiligen Verbindungselement führt, wenn dieses leicht an die Stützleiste 44 angedrückt wird. Wenn die Stützleisten 44 in Kontakt mit dem Brillenglas und den Verbindungselementen stehen, sollen die Stützleisten 44 das Brillenglas oder die Verbindungselemente nicht zerkratzen oder anderweitig beschädigen. Dementsprechend sollen die Stützleisten 44 nicht zu hart sein. Jede Stützleiste 44 hat ein Querschnittsprofil, das zumindest im Bereich der Oberseite der Stützleiste 44 gerundet ist.

Die beiden Stützleisten 44 werden von den in die Ausnehmungen 38 eingesetzten Trägern 42 derart getragen, dass die zueinander parallelen Oberkanten der Stützleisten 44 in einer zu der Zapfenachse 34 senkrechten Ebene verlaufen und von der Zapfenachse 34 gleiche Abstände haben.

Die Vorrichtung ist ferner mit einem Niederhalter 46 versehen. Dieser umfasst eine am Rahmen 24 befestigte Säule 48 sowie einen an der Säule 48 angelenkten, zweischenkligen Schwenkarm 50. Eine nicht dargestellte Zugfeder ist zwischen zwei Anlenkpunkten 52 des Niederhalters 46 gespannt und hält den Schwenkarm entweder in der in Figur 4 gezeigten Ruhestellung oder in einer Arbeitsstellung, in der der freie Schenkel des Schwenkarms 50 im Wesentlichen in Verlängerung der Zapfenachse 34 verläuft, wie dies in Figur 5 gezeigt ist. Dabei wird ein elastisches Element 54 am freien Ende des Schwenkarms 50 aufgrund der Kraft der nicht dargestellten Feder nach unten gedrückt.

Auf bzw. in der Oberseite der oberen Platte 26 sind vier zueinander parallele, gerade Hilfslinien 56 ausgebildet, die senkrecht zur Erstreckungsrichtung der zwei Stützleisten 44 verlaufen. Diese Hilfslinien sind zwar nicht unbedingt notwendig; sie erleichtern jedoch das Arbeiten mit der Vorrichtung, weswegen vorzugsweise zumindest eine solche Hilfslinie vorgesehen ist.

Im Folgenden wird ein mittels der vorstehend beschriebenen Vorrichtung durchgeführter Klebevorgang erläutert, wobei erläutert wird, wie das linke Brillenglas 2 mit dem Verbindungselement 12 der linken Backe 10 sowie einem der Verbindungselemente 8 der Brücke 6 der randlosen Brille gemäß dem vorstehend beschriebenen Ausführungsbeispiel verklebt werden.

Zunächst wird das Brillenglas 2, das die gewünschte Scheibenform und das Kastenmaß K hat und an dem die zwei Fügeflächen 22 ausgebildet sind, mit dem Haltezapfen 32 lösbar verbunden. Dies kann auf folgende Weise geschehen. Wenn zu diesem Zeitpunkt das Brillenglas 2 noch mit dem Glashalter verbunden ist, mit dem es zum Zweck des vorstehend beschriebenen Anschleifens der Scheibenform verbunden worden ist, und wenn dieser Glashalter ein zu seiner Drehachse koaxiales Sackloch aufweist, wird das freie Ende des Haltezapfens 32 in das Sackloch gesteckt bzw. wird der Glashalter auf das freie Ende des Haltezapfens 32 geschoben, so dass der Haltezapfen 32 und der Glashalter durch lösbaren Klemmsitz miteinander verbunden sind. Ein Glashalter, der dies ermöglicht, ist an sich bekannt und schematisch in den Figuren 5 und 6 dargestellt. Der dargestellte Glashalter 58 besteht aus einem elastischen Werkstoff und umfasst eine im Wesentlichen ovale Platte, die mit der Vorderseite 3 des Brillenglases 2 lösbar verklebt ist, sowie einen Zapfen 62, in dem das vorstehend genannte Sackloch ausgebildet ist. Unter den genannten Bedingungen ergibt sich eine Konfiguration, bei der die Zapfenachse 34 durch den geometrischen Mittelpunkt M und senkrecht zu der Vorderseite 3 des Brillenglases 2 verläuft, wie dies in den Figuren 5 und 6 gezeigt ist. Dementsprechend hält der Haltezapfen 32 das Brillenglas 2 mittig derart, dass dessen leicht gekrümmte Vorderseite sich im Wesentlichen senkrecht zu der Zapfenachse 34 erstreckt.

Wenn zu dem Zeitpunkt, zu dem das Brillenglas 2 mit den beiden Verbindungselementen 8 und 12 verklebt werden soll, der während des Anschleifens der Scheibenform verwendete Glashalter nicht mehr mit dem Brillenglas 2 verbunden ist, kann derselbe Glashalter oder ein gleichartiger Glashalter 58 mit dem Brillenglas 2 lösbar verklebt werden und wird dann der Haltezapfen 32 mit diesem Glashalter 58 zusammengesteckt, so dass sich ebenfalls die vorstehend erläuterte und in den Figuren 5 und 6 gezeigte Konfiguration aus dem Brillenglas 2, dem Glashalter 58 und dem Haltezapfen 32 ergibt. Es sind ferner beim Schleifen der Scheibenform eingesetzte Glashalter bekannt, die nicht mit einem zur Drehachse des Glashalters konzentrischen Sackloch versehen sind. Um einen solchen Glashalter zum Verbinden des Brillenglases 2 mit dem Haltezapfen 32 verwenden zu können, kommt ein modifizierter Haltezapfen 32 zur Anwendung, bei dem sein oberes Ende der Gestalt des Glashalters bzw. eines daran ausgebildeten Zapfens derart angepasst ist, dass der Haltezapfen 32 und der Glashalter zusammengesteckt werden können. Ein Beispiel hierfür zeigt Figur 8, in der schematisch ein Glashalter 32 dargestellt ist, der an seinem oberen Ende eine Ausnehmung aufweist, in die ein Zapfen 64 eines mit dem Brillenglas 2 lösbar verklebten Glashalters eingesteckt ist.

Der Glashalter, der zum Verbinden des Brillenglases mit dem Haltezapfen 32 dient, kann fest mit dem Haltezapfen verbunden sein, und er kann als Element der Vorrichtung angesehen werden.

Der mittels des Glashalters 58 lösbar mit dem linken Brillenglas 2 verbundene Haltezapfen 32 sitzt in der Bohrung 30, die im Rahmen 24 ausgebildet ist. Dadurch hält der Haltezapfen 32 das Brillenglas 2 in bzw. an der beschriebenen Vorrichtung und ist Element von deren Haltevorrichtung zum Halten des Brillenglases 2.

Der Abstand D zwischen den beiden Stützleisten 44, d.h. genauer gesagt zwischen deren Stützkanten, ist auf das Kastenmaß K des Brillenglases 2 derart abgestimmt, dass dieser Abstand D im Wesentlichen gleich der dem Kastenmaß K entsprechenden maximalen Breite des Brillenglases 2 abzüglich der mittleren Fügeflächenbreite FB der Fügeflächen 14 ist (siehe Figur 3). Das heißt mit anderen Worten, dass gilt

$$D \approx K \cdot mm - FB.$$

Der Haltezapfen 32 ist in der Bohrung 30 drehbar und axial verschiebbar. Dies ermöglicht es, das vom Haltezapfen 32 gehaltene Brillenglas 2 relativ zur Oberseite der oberen Platte 26 und somit relativ zur Arbeitsfläche der Vorrichtung anzuheben und abzusenken, und ermöglicht ferner, das Brillenglas 2 um die Zapfenachse 34 zu drehen. Die Ausnehmung 36 hat solche Abmessungen, dass der in der Ausnehmung 36 angeordnete Glashalter 58 diese Bewegungen nicht behindert, sofern sie ein erforderliches Ausmaß nicht überschreiten.

Während die Drehstellung des Brillenglases 2 um die Zapfenachse 34 derart ist, dass dessen Mittellinie L zumindest annähernd senkrecht zu der Erstreckungsrichtung der beiden Stützleisten 44 verläuft, wird das vom Haltezapfen 32 gehaltne Brillenglas 2 abgesenkt, bis das Brillenglas 2 mit seiner Vorderseite 3 auf den beiden Stützleisten 44 aufliegt. Die Vorderseite 3 des Brillenglases 2 ist somit den Stützleisten 44 zugewandt. Während das Brillenglas 2 auf den beiden Stützleisten 44 aufliegt, wird es vorzugsweise nach unten gedrückt, was vorzugsweise mittels des federbelasteten Schwenkarmes 50 des Niederhalters 46 erfolgt.

Soweit es erforderlich ist, wird dann das Brillenglas 2 manuell um die Zapfenachse 24 gedreht, bis die Mittellinie L des Brillenglases 2 möglichst genau senkrecht zu der Erstreckungsrichtung der beiden Stützleisten 44 verläuft. Dabei helfen die Hilfslinien 56 sowie die oberen und unteren Ränder der Fügeflächen 22 auf der Vorderseite 3 des Brillenglases 2. Im Anschluss daran wird das linke Verbindungselement der Brücke 6 zwischen die in Figur 6 rechte Stützleiste 44 und die Vorderseite 3 des Brillenglases 2 geschoben, wobei die Fügefläche 14 dieses Verbindungselementes 8 mit der zugeordneten Fügefläche 22 am Brillenglas 2 zur Deckung gebracht wird. Das Verbindungselement der linken Backe 10 wird zwischen die in Figur 6 linke Stützleiste 44 und die Vorderseite 3 des Brillenglases 2 geschoben, wobei die Fügefläche 14 dieses Verbindungselementes 12 und die zugeordnete Fügefläche 22 am Brillenglas 2 zur Deckung gebracht werden. Es kann dann eine Ausrichtung der Backe 10 und der Brücke 6 am Brillenglas 2 sowie eine erneute Ausrichtung der Drehstellung des Brillenglases 2 um die Zapfenachse 34 erfolgen, um das Brillenglas 2, die Backe 10 und die Brücke 6 relativ zueinander korrekt auszurichten. Dadurch wird schließlich der in den Figuren 5 und 6 gezeigte Zustand erreicht. In diesem Zustand ist jedes der beiden Verbindungselemente 8 und 12 zwischen einer der beiden Stützleisten 44 und der Vorderseite 3 des Brillenglases 2 eingeklemmt, wobei die Klemmkraft von der Kraft abhängt, mit der das Brillenglas 2 mittels des Niederhalters 46 niedergedrückt wird. Diese Kraft kann gegebenenfalls manuell ergänzt werden. Wegen des vorstehend erläuterten Abstandes D zwischen den Stützkanten der beiden Stützleisten 44 drückt jede Stützleiste von unten gegen das jeweilige Verbindungselement 8 bzw. 12 an einer Stelle, die in Breitenrichtung der Fügefläche 14 des Verbindungselementes mittig liegt. Dadurch wird erreicht, dass sich das Verbindungselement 8 bzw. 12 selbsttätig so ausrichtet, dass der Druck zwischen den einander zugeordneten Fügeflächen 14 und 22 über den gesamten Bereich derselben im Wesentlichen konstant ist.

Während die beiden Verbindungselemente 8 und 12 in vorstehend beschriebener Weise an ihren Anbringungsorten korrekt ausgerichtet und eingeklemmt sind, wird flüssiger Klebstoff in den Fügespalt zwischen den Fügeflächen 14 und 22 eingebracht. Dies kann beispielsweise mittels einer nicht dargestellten Hohlnadel aus Richtung eines in Figur 5 gezeigten Pfeils 66 erfolgen. Zumindest bis zum Erreichen der Anfangshaftung zwischen den Verbindungselementen einerseits und dem Brillenglas andererseits wird die von oben auf das Brillenglas 2 ausgeübte Kraft aufrecht gehalten. Danach wird diese Kraft aufgehoben und wird das Brillenglas 2 von der oberen Platte 26 abgehoben. Dabei kann beispielsweise der Haltezapfen 32 aus der Bohrung 30 herausgezogen werden, bevor er vom Glashalter 58 getrennt wird und dieser vom Brillenglas 2 gelöst wird. Es liegt somit schließlich eine Baugruppe vor, die aus dem linken Brillenglas 2, der linken Backe 10 und der Brücke 6 besteht. Das rechte Verbindungselement 8 der Brücke 6 kann anschließend mit dem rechten Brillenglas 4 verklebt werden, das außerdem mit dem Verbindungselement der rechten Backe verklebt wird. Diese Verklebungen am und mit dem rechten Brillenglas werden in gleicher Weise ausgeführt, wie dies vorstehend für die Verklebungen am und mit dem linken Brillenglas 2 erläutert ist.

Statt mit den Verklebungen am linken Brillenglas 2 zu beginnen, können zunächst die Verklebungen am rechten Brillenglas ausgeführt werden. In diesem Fall ist das rechte Brillenglas 4, das gestrichelt teilweise in Figur 5 gezeigt ist, bereits mit dem rechten Verbindungsabschnitt der Brücke 6 verklebt, während die Verklebungen am linken Brillenglas 2 ausgeführt werden. Um störende Momente am Anbringungsort des linken Verbindungselementes 8 der Brücke 6 zu vermeiden, wird in diesem Fall das rechte Brillenglas 4 zweckmäßigerweise mittels einer Unterlage 68 auf der Arbeitsfläche abgestützt.

Die beschriebene Vorrichtung kann auch in der Weise benutzt werden, dass zunächst nur das Verbindungselement der Brücke oder das Verbindungselement der Backe mittels einer der Stützleisten 44 am Brillenglas eingeklemmt und mit diesem verklebt wird, bevor das andere Verbindungselement an seinem Anbringungsort eingeklemmt und mit dem Brillenglas verklebt wird.

Die beschriebene Vorrichtung ist in ihrem Aufbau einfach. Sie ermöglicht einen unbehinderten Blick auf die Fügeflächen 14 und 22 sowie den Spalt dazwischen während der Ausbreitung des Klebstoffs in diesem Spalt, so dass eine genaue Dosierung des Klebstoffs möglich ist, was zur Erzielung einer dauerhaft festen Klebeverbindung beiträgt. Wegen der in etwa mittigen Abstützung der Verbindungselemente auf den Stützleisten richten sich die einander zugewandten Fügeflächen 14 und 22 selbsttätig relativ zueinander so aus, dass die Spaltdicke und der Druck zwischen diesen im gesamten Bereich der Fügeflächen im Wesentlichen konstant sind. Dies trägt zur Qualität der Klebeverbindung bei. Die Verbindungselemente werden dadurch an ihrem Anbringungsort am Brillenglas gehalten, dass sie zwischen der Vorderseite des Brillenglases und einer der Stützleisten 44 eingeklemmt sind. Diese Fixierung der Verbindungselemente beugt auch kleinsten Relativbewegungen zwischen den einander zugewandten Fügeflächen während der Reaktion des Klebstoffs vor, was ebenfalls zu hoher Qualität der Klebeverbindungen beiträgt.

Da die Stützleisten 44 gerade und parallel zueinander verlaufen und ihre Stützkanten den vorstehend erläuterten Abstand D voneinander haben, eignet sich die Vorrichtung, soweit sie vorstehend beschrieben ist, zum Verkleben von Brillengläsern mit beliebiger Scheibenform, sofern das Kastenmaß K gleich ist.

Um die Vorrichtung für unterschiedlich große Brillengläser, d.h. Brillengläser mit voneinander verschiedenen Kastenmaßen K, geeignet zu machen, kann vorzugsweise vorgesehen sein und ist bei dem beschriebenen Ausführungsbeispiel vorgesehen, dass zu der Vorrichtung mehrere Paare von Trägern gehören, wobei in Abhängigkeit von dem Kastemaß K des Brillenglases die Träger eines dieser Paare in die Ausnehmungen 38 eingesetzt sind. Figur 7 zeigt in Draufsicht beispielhaft drei Paare 70, 72 und 74 von Trägern, wobei das Paar 70 aus Trägern 78 und 80 besteht, das Paar 72 aus den Trägern 42 besteht und das Paar 74 aus Trägern 82 und 84 besteht. Alle Träger 42, 78, 80, 82 und 84 haben die gleiche Gestalt, so dass jeder dieser Träger in eine der beiden Ausnehmungen 38 passend einsetzbar ist.

Die Träger 42 des Paares 72 sind die in den Figuren 4 bis 6 gezeigten Träger 42. Bei diesen hat die an dem Träger 42 angeordnete Stützleiste 44 vom in Figur 7 linken Längsrand des Trägers den gleichen Abstand wie von dem in Figur 7 rechten Längsrand des Trägers. Wenn die Träger 42 des Paares 72 in die Ausnehmungen 38 eingesetzt sind, wie dies in den Figuren 4 bis 6 gezeigt ist, haben die Stützkanten der Stützleisten 44 einen Abstand D voneinander, der beispielsweise für das Kastenmaß K=52 geeignet ist, wie dies durch die Beschriftung der Träger 42 des Paares 72 zum Ausdruck gebracht ist. Die Träger 78 und 80 des Paares 70 unterscheiden sich von den Trägern 42 des Paares 72 dadurch, dass die Stützleisten 44 nicht mittig zwischen den Längskanten der Stützleisten 78 und 80 angeordnet sind, sondern in Richtung zu einer dieser Längskanten versetzt sind. An dem Träger 78 ist die Stützleiste 44 aus der Mitte in Richtung zu der linken Längskante versetzt angeordnet, und an dem Träger 80 ist die Stützleiste 44 aus der Mitte in Richtung zu der rechten Längskante versetzt angeordnet. Wenn der Träger 78 in die in den Figuren 5 und 6 linke Ausnehmung 38 eingesetzt ist und der Träger 80 in die in den Figuren 5 und 6 rechte Ausnehmung 38 eingesetzt ist, ergibt sich ein Abstand D zwischen den Stützkanten der Stützleisten, der beispielsweise für das Kastenmaß 54 geeignet und diesem angepasst ist. Wenn jedoch der Träger 78 in die in den Figuren 5 und 6 rechte Ausnehmung 38 eingesetzt ist und der Träger 80 in die in den Figuren 5 und 6 linke Ausnehmung 38 eingesetzt ist, ergibt sich ein geringerer Abstand D zwischen den Stützkanten der Stützleisten 44, der beispielsweise einem Kastenmaß K=50 entspricht und zugeordnet ist. Dementsprechend sind die beiden Träger 78 und 80 des Paares 70 mit den "50" und "54" beschriftet.

Die Träger 82 und 84 des Paares 74 unterscheiden sich von den Trägern des Paares 70 dadurch, dass die Stützleisten 44 noch weiter aus der Mitte zu einem Längsrand des jeweiligen Trägers versetzt sind als dies bei den Trägern 78 und 80 des Paares 70 der Fall ist. Die Erläuterungen zum Paar 70 gelten daher für das Paar 74 sinngemäß, wobei die mit den Stützleisten 44 versehenen Träger 82 und 84 beispielsweise für die auf den Trägern angegebenen Kastenmaße K=48 und K=56 bestimmt und geeignet sind.

Die mehreren Paare 70, 72 und 74 von Trägern ermöglichen es somit, durch Austausch der Träger eines Paares gegen die eines anderen der Paare und durch Austausch der Träger eines Paares gegeneinander die beschriebene Vorrichtung in einfacher Weise dem Kastenmaß K des Brillenglases anzupassen, mit dem die Verbindungselemente verklebt werden sollen.

Die Erfindung bezieht sich auf eine Klebevorrichtung, nämlich eine Vorrichtung zum Verkleben eines Brillenglases einer randlosen Brille mit Verbindungselementen einer Brücke und einer Backe einer randlosen Brille. Die Vorrichtung weist einen zylindrischen Haltezapfen auf, der um seine Achse drehbar und axial verschiebbar in einer Bohrung eines Rahmens der Vorrichtung angeordnet ist. Der Haltezapfen ist dazu bestimmt, das Brillenglas mittig derart zu halten, dass dessen leicht konvex gekrümmte Vorderseite sich im Wesentlichen senkrecht zu der Zapfenachse erstreckt. In einer zu der Zapfenachse senkrechten Ebene verlaufen zwei gerade Stützleisten parallel zueinander und beiderseits der Zapfenachse, von der die Stützleisten gleiche Abstände haben. Die Stützleisten sind derart am Rahmen angeordnet, dass die Vorderseite des vom Haltezapfen gehaltenen Brillenglases den Stützleisten zugewandt ist. Der Haltezapfen hält das Brillenglas so, dass das Brillenglas mit seiner Vorderseite in Richtung zu den Stützleisten gedrückt werden kann, so dass zwischen der Vorderseite und jeder der Stützleisten eines der Verbindungselemente einklemmbar ist. Die Vorrichtung dient dazu, die auf der Vorderseite des Brillenglases eingeklemmten Verbindungselemente während des Einbringens von Klebstoff zwischen Fügeflächen am Brillenglas und am jeweiligen Verbindungselement und für eine gewisse Zeit danach zuverlässig in selbsttätig ausgerichteter, korrekter Position zu fixieren.

## Patentansprüche

1. Vorrichtung zum Verkleben eines Brillenglases (2) einer randlosen Brille mit Verbindungselementen (8, 12) einer Brücke (6) und einer Backe (10) der randlosen Brille, wobei die Vorrichtung einen Rahmen (24) sowie eine Haltevorrichtung zum Halten des Brillenglases (2) aufweist, **dadurch gekennzeichnet, dass** die Haltevorrichtung einen zylindrischen Haltezapfen (32) aufweist, der um seine Zapfenachse (34) drehbar und axial verschiebbar in einer Bohrung (30) des Rahmens (24) angeordnet ist und dazu bestimmt ist, das Brillenglas (2) mittig derart zu halten, dass dessen Vorderseite (3) sich im Wesentlichen senkrecht zu der Zapfenachse (34) erstreckt, und **dass** am Rahmen (24) zwei gerade Stützleisten (44) angeordnet sind, die sich in einer zu der Zapfenachse (34) senkrechten Ebene parallel zueinander erstrecken und von der Zapfenachse (34) gleiche Abstände haben, wobei die zwei Stützleisten (44) derart angeordnet sind, dass die Vorderseite (3) des vom Haltezapfen (32) gehaltenen Brillenglases (2) den Stützleisten (44) zugewandt ist und zwischen dieser Vorderseite (3) und jeder der Stützleisten (44) eines der Verbindungselemente (8, 12) einklemmbar ist.

2. Vorrichtung nach Anspruch 1, **dadurch gekennzeichnet, dass** jede der zwei Stützleisten (44) ein Querschnittsprofil hat, das in seinem der Vorderseite (3) des vom Haltezapfen (32) gehaltenen Brillenglases (2) zugewandten Abschnitt gerundet ist.

3. Vorrichtung nach Anspruch 1 oder 2, **dadurch gekennzeichnet, dass** die Stützleisten (44) jeweils durch einen Stab oder Schlauch aus Kunststoff gebildet sind.

4. Vorrichtung nach einem der Ansprüche 1 bis 3, **dadurch gekennzeichnet, dass** die Stützleisten (44) jeweils an einem Träger (42) angeordnet oder ausgebildet sind, der in eine Ausnehmung (38) des Rahmens (24) eingesetzt ist.

5. Vorrichtung nach Anspruch 4, **dadurch gekennzeichnet, dass** der Träger (42) die Gestalt eines langgestreckten Quaders hat.

6. Vorrichtung nach Anspruch 4 oder 5, **gekennzeichnet durch** zwei oder mehr Paare (70, 72, 74) von jeweils mit einer der Stützleisten (44) versehenen Trägern (42; 78, 80; 82, 84), wobei sich die Träger eines der Paare (70, 72, 74) von den Trägern eines anderen der Paare **durch** die Position der Stützleisten (44) an den Trägern (42; 78, 80; 82, 84) unterscheiden.

7. Vorrichtung nach einem der Ansprüche 1 bis 6, **ge-**

**kennzeichnet durch** einen Niederhalter (46), der dazu bestimmt ist, das vom Haltezapfen (32) gehaltene Brillenglas (2) in Richtung zu den Stützleisten (44) zu drükken.

8. Vorrichtung nach Anspruch 7, **dadurch gekennzeichnet, dass** der Niederhalter (46) einen federbelasteten Schwenkarm (50) aufweist, der in seiner Arbeitsstellung mit seinem freien Ende mittig gegen das von dem Haltezapfen (32) gehaltene Brillenglas (2) drückt.

*Fig.1*

*Fig.2*

*Fig.3*

*Fig.7*

*Fig.8*

Fig.4

Fig.5

Fig.6

Europäisches
Patentamt

European
Patent Office

Office européen
des brevets

**EUROPÄISCHER RECHERCHENBERICHT**

**Nummer der Anmeldung**

EP 10 15 4069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/096496 A1 (CORKE ROY [GB]) 11. November 2004 (2004-11-11) * Abbildungen 1, 2, 4, 5, 6, 10 * * Absatz [0005] * * Absatz [0010] * * Absatz [0037] - Absatz [0040] * * Absatz [0046] - Absatz [0054] * ----- | 1-8 | INV. G02C13/00 G02C1/02 |
| A | EP 1 238 731 A1 (HOYA CORP [JP]) 11. September 2002 (2002-09-11) * das ganze Dokument * ----- | 1-8 | |
| A,D | EP 2 019 331 A1 (ANGER WILHELM [AT]) 28. Januar 2009 (2009-01-28) * das ganze Dokument * ----- | 1-8 | |

| RECHERCHIERTE SACHGEBIETE (IPC) |
|---|
| G02C |

Der vorliegende Recherchenbericht wurde für alle Patentansprüche erstellt

| Recherchenort | Abschlußdatum der Recherche | Prüfer |
|---|---|---|
| München | 7. Juli 2010 | Vazquez Martinez, D |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 15 4069

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2010

| Im Recherchenbericht angeführtes Patentdokument | Datum der Veröffentlichung | Mitglied(er) der Patentfamilie | Datum der Veröffentlichung |
|---|---|---|---|
| WO 2004096496 A1 | 11-11-2004 | KEINE | |
| EP 1238731 A1 | 11-09-2002 | AU 7949000 A<br>CN 1382077 A<br>WO 0128720 A1<br>JP 3358656 B2<br>JP 2001121330 A<br>TW 482703 B<br>US 6561738 B1 | 30-04-2001<br>27-11-2002<br>26-04-2001<br>24-12-2002<br>08-05-2001<br>11-04-2002<br>13-05-2003 |
| EP 2019331 A1 | 28-01-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2019331 A1